# EUROPEAN PATENT SPECIFICATION

(11) **EP 3 485 157 B1**
(45) Date of publication and mention of the grant of the patent: **28.02.2024**
(21) Application number: 17828052.5
(22) Date of filing: 12.05.2017
(51) Int. Cl.: F02G 5/02, B60W 40/06, B60W 50/00, F01K 23/06, F01K 23/10, F01N 5/02, F01K 23/14, F01K 15/02

(54) **METHOD AND SYSTEM FOR CONTROLLING THE WASTE HEAT RECOVERY SYSTEM AT A PREDICTED DOWNHILL SLOPE**
VERFAHREN UND SYSTEM ZUR STEUERUNG DES ABWÄRMENUTZUNGSSYSTEMS BEI EINER VORHERGESAGTEN ABWÄRTSNEIGUNG
PROCÉDÉ ET SYSTÈME DE COMMANDE DU SYSTÈME DE RÉCUPÉRATION DE CHALEUR PERDUE AU NIVEAU D'UNE PENTE DESCENDANTE PRÉVUE

(30) Priority: 12.07.2016 SE 1651040
(43) Date of publication of application: 22.05.2019
(73) Proprietor: Scania CV AB, 151 87 Södertälje (SE)
(72) Inventor: JOHANSSON, Björn, 125 31 Älvsjö (SE); HÖCKERDAL, Erik, 151 44 Södertälje (SE); TIMREN, Thomas, 619 91 Trosa (SE)
(74) Representative: Scania CV AB
(86) International application number: PCT/SE2017/050486
(87) International publication number: WO 2018/013028

(56) References cited:
- WO-A1-2016/089277
- DE-A1-102015 007 104
- JP-A- 2012 001 168
- JP-A- 2015 108 304
- US-A1- 2009 211 253
- US-A1- 2013 333 380
- US-A1- 2015 073 637
- US-A1- 2015 308 318

## Description

### TECHNICAL FIELD

The present invention relates to a method for controlling a waste heat recovery system, a waste heat recovery system and a vehicle comprising such a waste heat recovery system according to the appended claims.

### BACKGROUND

Vehicle manufacturers are today striving to increase engine efficiency and reduce fuel consumption. This is specifically an issue for manufacturers of heavy vehicles, such as trucks and buses. In vehicles with combustion engines some of the energy from the fuel is dissipated as heat through the exhaust pipes and the engine cooling system. By the use of a waste heat recovery system some of the dissipated heat may instead be used to produce mechanical work. The mechanical work may for example be transferred to the powertrain and thus be used to propel the vehicle. This way the engine efficiency and the fuel consumption may be improved.

Waste heat recovery systems are typically based on the Rankine cycle and thus comprise a working fluid, a pump for circulating the working fluid in a circuit, at least one evaporator, an expansion device and a condenser. The working fluid is suitably in a liquid state to start with. The pump pressurizes the working fluid which is pumped through the evaporator. The working fluid is heated by the heat sources and the working fluid thereby evaporates. The vapour is subsequently expanded in the expansion device. By means of the expansion device the recovered heat is converted into mechanical work. The vapour is thereafter cooled in the condenser, such that the working fluid is brought back to its initial liquid state. The condenser is thus typically connected to a cooling circuit, which could be part of the engine cooling system or a separate cooling circuit.

The mechanical work generated by the expansion device may be transferred to the powertrain of the vehicle if the expansion device is mechanically connected to the powertrain. Document US2009211253 A1 discloses a waste heat recovery system where a shaft of a turbine (expansion device) is coupled to the engine crankshaft. The mechanical work generated by the expansion device is thus torque used to propel the vehicle. The extra torque provided by such waste heat recovery systems may not always be desired. When a vehicle is driving uphill high load on the combustion engine will result in higher temperature of the exhaust gases and thereby more energy transferred via the evaporator to the waste heat recovery system. This means that more torque can be provided by the expansion device. Driving uphill, this is typically an advantage. However, when the vehicle starts driving downhill the extra torque provided by the waste heat recovery system may not be desired. In a long downhill slope the vehicle speed will increase due to the mass of the vehicle (potential energy) and there is a risk that the vehicle speed becomes too high. Extra torque from the waste heat recovery system may thus not be needed. If extra torque is not needed the energy in the waste heat recovery system should be conserved in some way.

DE 10 2015 007104 discloses a method for controlling a waste heat recovery system associated with a powertrain of a vehicle.

US 2013/333380 discloses a Rankine cycle which is mechanically connected to a powertrain of a combustion engine.

### SUMMARY OF THE INVENTION

Despite known solutions in the field, there is still a need to develop a method for controlling a waste heat recovery system, which conserves the stored energy in the waste heat recovery system when the energy output from the system is not needed to propel the vehicle.

An object of the present invention is to achieve an advantageous method for controlling a waste heat recovery system, which conserves the stored energy in the waste heat recovery when the energy output from the system is not needed. Another object of the invention is to achieve an advantageous method for controlling a waste heat recovery system, which conserves the stored energy in the system when the energy is not needed to propel the vehicle.

Another object of the invention is to achieve an advantageous waste heat recovery system, which conserves the stored energy in the waste heat recovery system when the energy output from the system is not needed. Another object of the invention is to achieve an advantageous waste heat recovery system, which conserves the stored energy in the system when the energy is not needed to propel the vehicle.

The herein mentioned objects are achieved by a method for controlling a waste heat recovery system, a waste heat recovery system, a vehicle, a computer program and a computer program product according to the independent claims. According to an aspect of the present invention a method for controlling a waste heat recovery system associated with a powertrain of a vehicle is provided. The powertrain comprising a combustion engine and a gearbox connected to the combustion engine, the waste heat recovery system comprising a working fluid circuit; an evaporator; an expander; a condenser; a reservoir for a working fluid and a pump arranged to pump the working fluid through the circuit, wherein the evaporator is arranged for heat exchange between the working fluid and at least one heat source, wherein the waste heat recovery system further comprises a cooling circuit arranged in connection to the condenser, and wherein the expander is mechanically connected to the powertrain. The method comprises the steps of:
- predicting a downhill slope which will require braking of the vehicle;
- reducing the temperature of the evaporator to a predetermined temperature; and
- turning off the pump and thus the waste heat recovery system;
wherein the step of reducing the temperature of the evaporator comprises to control the at least one heat source to bypass the evaporator.

The waste heat recovery system of the invention is suitably based on the Rankine cycle, preferably an organic Rankine cycle. The working fluid is thus suitably organic, such as ethanol or acetone. The waste heat recovery system based on the Rankine cycle is suitably configured such that the working fluid, suitably in a liquid state, is pumped through the evaporator. The working fluid is thereby heated by the at least one heat source connected to the evaporator and the working fluid thus evaporates. The vapour is then expanded in the expander whereby mechanical work is produced. The mechanical work is transferred from the expander as torque to the powertrain. The mechanical work may for example be transferred to the crankshaft of the combustion engine or the gearbox and thus be used to propel the vehicle. The vapour is thereafter cooled in the condenser by heat exchange with the cooling fluid in the cooling circuit, such that the working fluid is brought back to its initial liquid state. The at least one heat source in the vehicle comprising the waste heat recovery system may be exhaust gases from the combustion engine, an exhaust gas recirculation system, the cooling fluid of the combustion engine, the combustion engine itself or any other hot component in the vehicle. The at least one heat source is preferably associated with the combustion engine. The evaporator is suitably a heat exchanger connected to the at least one heat source and the working fluid circuit. The heat transfer between the working fluid and the heat source is an exchange of energy resulting in a change in temperature. Thus, the heat source is providing the energy entering the waste heat recovery system and the energy is leaving the waste heat recovery system as mechanical work via the expander and as heat via the cooling circuit. The temperature in the waste heat recovery system thus depends on the amount of energy entering the system and the amount of energy leaving the system.

The torque provided by the expander helps propelling the vehicle but there might be situations where the extra torque is not needed. When a vehicle is driving uphill the high load on the combustion engine will increase the temperature of the exhaust gases and more energy will be transferred via the evaporator to the waste heat recovery system. This means that a large torque can be provided by the expander. This is typically an advantage when driving uphill but when the vehicle starts driving downhill the extra torque may not be desired. In a long downhill slope the vehicle speed will increase of itself due to the mass of the vehicle (potential energy). This often results in a need to brake the vehicle somewhere along the downhill slope in order to maintain a desired vehicle speed. Braking may be requested and/or initiated by the operator of the vehicle or by a vehicle system, such as a downhill speed control system. In order to save fuel vehicles are usually braked by coasting with a gear engaged when driving down a long slope. When the vehicle is coasting with a gear engaged, the engine is running and the fuel supply is cut off, such that the engine is driven by the driving wheels of the vehicle. If the vehicle has to be braked while driving down a slope the extra torque provided by the expander is not needed. In fact, the extra torque would only increase the need for braking the vehicle. It is therefore desired to instead conserve the energy in the waste heat recovery system. This can be achieved by turning off the waste heat recovery system. By conserving the energy in the waste heat recovery system, torque can quickly be provided once the waste heat recovery system is activated again. The evaporator is the major energy reservoir in the waste heat recovery system. The operating temperature of the waste heat recovery system is, however, normally quite high and the thermal inertia of the system (specifically the thermal inertia of the evaporator) results in a high temperature long after the system has been shut down. In the case where the vehicle has been driving uphill, the temperature is of course even higher. Too high temperatures could damage the working fluid and other components of the waste heat recovery system. It is therefore important that the waste heat recovery system is cooled down before the system is shut down. By predicting a downhill slope which will require braking of the vehicle, reducing the temperature of the evaporator to a predetermined temperature and thereafter turning off the pump and thus the waste heat recovery system, it is ensured that the energy in the system is conserved in a safe and efficient way when it is not needed as mechanical work. A method for controlling a waste heat recovery system to conserve energy and reduce the thermal load on the cooling system when mechanical work from the system is not needed is thereby achieved.

By reducing the temperature of the evaporator, the amount of energy entering the waste heat recovery system is reduced and the temperature in the waste heat recovery system is thereby reduced. The predetermined temperature is suitably a temperature at which it is considered to be safe to turn off the waste heat recovery system. The predetermined temperature may be around 200 degrees Celsius; the exact temperature depends on the working fluid type. By turning off the pump, the working fluid will stop circulate in the waste heat recovery system and no energy transfer is thereby possible and the system is considered to be shut down.

The method suitably comprises to predict a downhill slope which will require braking of the vehicle in order not to exceed a predetermined vehicle speed. Such predetermined vehicle speed may be a desired speed requested by the operator of the vehicle or it may be a speed limitation. A downhill slope which will require braking of the vehicle is typically a long downhill slope. A downhill slope which will require braking of the vehicle is suitably predicted based on road inclination, friction, length of the slope or similar. Such road data is available in the vehicle control system and may be determined by means of navigation systems, sensors and/or cameras. Braking the vehicle may involve braking by coasting and/or by activation of an auxiliary brake of the vehicle. Whether braking of the vehicle is necessary or not also depends on the vehicle characteristics, such as vehicle speed prior to the downhill slope and the weight/load of the vehicle. If braking is needed, it is obvious that extra torque is not needed. The method thus suitably comprises to predict a driving situation where mechanical work provided by the expander in the waste heat recovery system is not needed to propel the vehicle.

The cooling circuit connected to the condenser may be part of the combustion engine cooling system or a separate cooling system. The cooling fluid cooling the condenser may thereby be circulated in the cooling circuit by a cooling pump, driven by the combustion engine or by an electric machine.

According to an aspect of the invention the step of reducing the temperature of the evaporator is initiated when the vehicle is at the crest of the predicted downhill slope. This way, the extra torque provided by the expander is used to propel the vehicle up to the crest of the hill and the waste heat recovery system is then cooled down before being shut down. The step of reducing the temperature of the evaporator may be initiated just before the vehicle is at the crest of the predicted downhill slope. Where the vehicle is in relation to the hill crest may be determined by means of look-ahead data available in the vehicle. The step of reducing the temperature of the evaporator to the predetermined temperature suitably takes less than two minutes.

According to an aspect of the invention the step of reducing the temperature of the evaporator is initiated when an auxiliary brake of the vehicle has been activated. The auxiliary brake may be a retarder, an exhaust brake or a compression release brake. When predicting the downhill slope it may be difficult to determine how long the downhill slope will be. When an auxiliary brake of the vehicle is activated while driving downhill, it is indicated that the torque from the waste heat recovery system is not needed. It is thereby suitable to initiate the reduction of the evaporator temperature. Also, when the cooling circuit of the waste heat recovery system is part of the engine cooling system, the auxiliary brake is connected to the same cooling circuit as the waste heat recovery system. When the auxiliary brake is activated it thereby increases the load on the cooling circuit. In order to reduce the load on the cooling circuit, the temperature of the evaporator is therefore suitably reduced when an auxiliary brake is activated. This way, the waste heat recovery system will transfer less heat to the cooling system.

According to the invention the step of reducing the temperature of the evaporator comprises to control the at least one heat source to bypass the evaporator. This way, less heat is exchanged through the evaporator. The heat transfer between the working fluid and the heat source is an exchange of energy resulting in a change in temperature. Thus, the heat source is providing the energy entering the waste heat recovery system. By controlling the heat source to bypass the evaporator the temperature of the evaporator is reduced and the heat transfer to the working fluid is reduced. The circulation of the working fluid can thereafter be stopped without damaging the components of the waste heat recovery system. In the case where the heat source is exhaust gases from the combustion engine, the step to reduce the temperature of the evaporator may comprise to control the exhaust gases such that they bypass the evaporator. The at least one heat source is suitably controlled to bypass the evaporator by controlling a first bypass device, such as a bypass valve, arranged in fluid communication with the at least one heat source. The at least one heat source is suitably controlled to bypass the evaporator as long as the pump is turned off and the waste heat recovery system thus is shut down.

The method suitably comprises the further step of controlling the working fluid to bypass the evaporator. This way, the working fluid and the other components of the waste heat recovery system are protected from the heat of the evaporator. If the evaporator is bypassed on the working fluid side, the evaporator does not need to be cooled down as much as if it is not bypassed on the working fluid side. By bypassing the evaporator on the working fluid side, heat transfer from the evaporator to the cooling circuit is avoided. The cooling circuit is typically used for cooling the auxiliary brake in a long downhill slope and it is therefore advantageous to avoid heating the cooling circuit with the waste heat recovery system during such driving conditions. The working fluid may be controlled to bypass the evaporator by controlling a second bypass device arranged in fluid communication with the working fluid. When the evaporator is bypassed on the working fluid side and the heat source side the temperature of the evaporator is reduced, which will affect the ability to vaporize the working fluid. If the working fluid is in liquid phase when entering the expander, the expander may be damaged. By controlling the pump to decrease the mass flow of the working fluid, the temperature of the evaporator may be enough to vaporize and superheat the working fluid. This depends on the temperature in the evaporator and the pressure in the working fluid circuit. The expander may therefore not need to be bypassed. The method may alternatively comprise to bypass the expander.

According to an aspect of the invention the method further comprises the step of:
- starting the pump when torque is requested once again or when braking of the vehicle has stopped.

Torque may be requested by the operator of the vehicle by depressing the accelerator pedal. Torque may alternatively be requested by a vehicle system, for example a downhill speed control system. The braking of the vehicle may be stopped by the operator by inactivating a previously activated auxiliary brake. The braking of the vehicle may alternatively be stopped by a vehicle system inactivating a previously activated auxiliary brake. This way, it is indicated that the extra torque which the expander can provide is useful once again. The method suitably comprises to stop bypassing the evaporator on the heat source side and the working fluid side when torque is requested once again or when braking of the vehicle has stopped. The waste heat recovery system is thereby active again and heat from the at least one heat source can be converted to mechanical work by the expander.

The waste heat recovery system may comprise one or more evaporators/ heat exchangers. The waste heat recovery system may for example comprise a recuperator arranged to pre-heat the working fluid before entering the evaporator. The waste heat recovery system may also comprise one or more condensers, such that cooling of the working fluid may be performed in multiple steps. Furthermore, the system may comprise one or more expanders. The expander is suitably a fixed displacement expander or turbine expander. The expander may be mechanically connected directly to the combustion engine or it may be mechanically connected to the gearbox or other components of the powertrain.

The waste heat recovery system may be associated with a combustion engine of a hybrid vehicle. Such hybrid vehicle comprises an electric machine for propulsion, in addition to the combustion engine.

The method steps are suitably performed by means of a control unit connected to the evaporator, the expander, the condenser, the pump and the bypass devices. The predetermined temperature is suitably stored in the control unit.

According to an aspect of the present invention a waste heat recovery system associated with a powertrain of a vehicle is provided. The powertrain comprising a combustion engine and a gearbox connected to the combustion engine, the waste heat recovery system comprising a working fluid circuit; an evaporator; an expander; a condenser; a reservoir for a working fluid and a pump arranged to pump the working fluid through the circuit, wherein the evaporator is arranged for heat exchange between the working fluid and at least one heat source, and wherein the waste heat recovery system further comprises a cooling circuit arranged in connection to the condenser, and wherein the expander is mechanically coupled to the powertrain. The waste heat recovery system comprises a control unit adapted to predict a downhill slope which will require braking of the vehicle; reduce the temperature of the evaporator to a predetermined temperature; and to turn off the pump and thus the waste heat recovery system.

The control unit is suitably connected to the evaporator, the expander, the pump and the cooling circuit. The control unit may be the engine control unit or may comprise a plurality of different control units. A computer may be connected to the control unit.

The control unit may be adapted to predict a downhill slope which will require braking of the vehicle in order not to exceed a predetermined vehicle speed. Such predetermined vehicle speed may be a desired speed requested by the operator of the vehicle or it may be a speed limitation. The control unit may be adapted to predict a driving situation where mechanical work provided by the expander in the waste heat recovery system is not needed. The control unit is suitably adapted to predict the downhill slope which will require braking of the vehicle based on road inclination, friction, length of the slope or similar.

The control unit is suitably adapted to initiate the reduction of the temperature of the evaporator when the vehicle is at the crest of the predicted downhill slope. The control unit may be adapted to initiate the reduction of the temperature of the evaporator just before the vehicle is at the crest of the predicted downhill slope.

The control unit is suitably adapted to initiate the reduction of the temperature of the evaporator when an auxiliary brake of the vehicle has been activated.

According to the invention the control unit is adapted to reduce the temperature of the evaporator by controlling the at least one heat source to bypass the evaporator.

The control unit may be further adapted to control the working fluid to bypass the evaporator. The control unit may also be adapted to control the working fluid to bypass the expander.

The control unit is suitably adapted to start the pump when torque is requested once again or the braking of the vehicle has stopped. The control unit is suitably adapted to stop bypassing the evaporator when torque is requested once again or the braking of the vehicle has stopped.

Further objects, advantages and novel features of the present invention will become apparent to one skilled in the art from the following details, and also by putting the invention into practice. Whereas the invention is described below, it should be noted that it is not restricted to the specific details described. Specialists having access to the teachings herein will recognise further applications, modifications and incorporations within other fields, which are within the scope of the invention.

### BRIEF DESCRIPTION OF THE DRAWINGS

For fuller understanding of the present invention and further objects and advantages of it, the detailed description set out below should be read together with the accompanying drawings, in which the same reference notations denote similar items in the various drawings, and in which:
- Figure 1: schematically illustrates a vehicle according to an embodiment of the invention;
- Figure 2: schematically illustrates a waste heat recovery system according to an embodiment of the invention;
- Figure 3: schematically illustrates a flow chart for a method for controlling a waste heat recovery system according to an embodiment of the invention; and
- Figure 4: schematically illustrates a control unit or computer according to an embodiment of the invention.

### DETAILED DESCRIPTION OF THE DRAWINGS

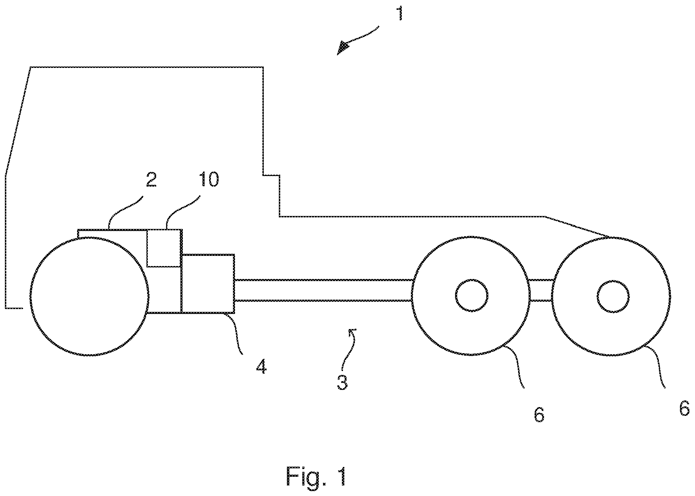

Figure 1 schematically shows a side view of a vehicle 1 according to an embodiment of the invention. The vehicle 1 has a powertrain 3 comprising a combustion engine 2 and a gearbox 4 connected to the combustion engine 2 and the driving wheels 6 of the vehicle 1. The vehicle 1 further comprises a waste heat recovery system 10 associated with the powertrain 3. The vehicle 1 may be a heavy vehicle, e.g. a truck or a bus. The vehicle 1 may alternatively be a passenger car. The vehicle may be a hybrid vehicle comprising an electric machine (not shown) in addition to the combustion engine 2.

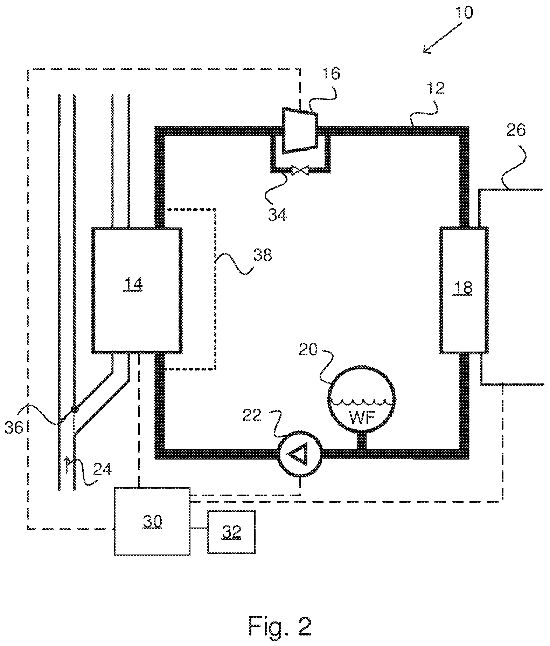

Figure 2 schematically shows a waste heat recovery system 10 associated with a powertrain 3 of a vehicle 1 according to an embodiment of the invention. The vehicle 1 is suitably configured as described in Figure 1. The waste heat recovery system 10 comprises a working fluid circuit 12; an evaporator 14; an expander 16; a condenser 18; a reservoir 20 for a working fluid WF and a pump 22 arranged to pump the working fluid WF through the circuit 12, wherein the evaporator 14 is arranged for heat exchange between the working fluid WF and at least one heat source 24, wherein the waste heat recovery system 10 further comprises a cooling circuit 26 arranged in connection to the condenser 18 and wherein the expander 16 is mechanically connected to the powertrain 3.

The waste heat recovery system 10 is suitably based on an organic Rankine cycle. The working fluid WF is thus suitably organic, such as ethanol or acetone. The waste heat recovery system 10 is configured such that the liquid working fluid WF is pumped from low pressure to high pressure and enters the evaporator 14. The working fluid WF is thereby heated by the at least one heat source 24 connected to the evaporator 14 and the working fluid WF is thus evaporated. The vapour is then expanded in the expander 16 whereby mechanical work is produced and transferred to the powertrain 3, whereby the temperature and the pressure of the vapour is decreased. The vapour thereafter enters the condenser 18 where condensation through heat exchange between the vapour and the cooling fluid of the cooling circuit 26 brings the working fluid WF back to its initial liquid state. Thus, the heat source 24 is providing the energy entering the waste heat recovery system 10 and the energy is leaving the waste heat recovery system 10 as mechanical work via the expander 16 and as heat via the cooling circuit 26 cooling the condenser 18. The temperature of the working fluid WF in the waste heat recovery system 10 thus depends on the amount of energy entering the system 10 and the amount of energy leaving the system 10.

The waste heat recovery system 10 comprises a control unit 30 adapted to predict a downhill slope which will require braking of the vehicle; reduce the temperature of the evaporator 14 to a predetermined temperature; and to turn off the pump 22 and thus shut down the waste heat recovery system 10. A computer 32 may be connected to the control unit 30.

Only vapour should enter the expander 16 and the waste heat recovery system 10 therefore comprises a bypass arrangement 34, such that in the case where the working fluid WF is still in a liquid state downstream of the evaporator 14, the working fluid WF is bypassing the expander 16 through the bypass arrangement 34. The waste heat recovery system 10 further comprises a first bypass device 36 arranged to control the at least one heat source 24 to bypass the evaporator 14. The first bypass device 36 is herein illustrated with a solid line in a position where the evaporator 14 is not bypassed and with a dotted line in a position where the evaporator 14 is bypassed. The control unit 30 is suitably adapted to control the first bypass device 36 such that the at least one heat source 24 is bypassing the evaporator 14 in order to reduce the temperature of the evaporator 14. The waste heat recovery system 10 may also comprise a second bypass device 38 arranged to control the working fluid WF to bypass the evaporator 14. The control unit 30 is suitably adapted to control the second bypass device 38 such that the working fluid WF is bypassing the evaporator 14. The control unit 30 is arranged in connection to the evaporator 14, the expander 16, the cooling circuit 26, the pump 22, the first bypass device 36 and the second bypass device 38.

The expander 16 is suitably a fixed displacement expander, such as a piston expander, or a turbine expander. The expander 16 may be mechanically connected directly to the combustion engine 2 or to the gearbox 4. The at least one heat source 24 connected to the evaporator 14 may be exhaust gases from the combustion engine 2, an exhaust gas recirculation system (EGR), the cooling fluid of the combustion engine 2, the combustion engine 2 itself or any other hot component associated with the combustion engine 2. The at least one heat source 24 is herein illustrated as a medium passing through the evaporator 14. The at least one heat source 24 is herein illustrated as arrows and may be exhaust gases originating from the combustion engine 2. The waste heat recovery system 10 may comprise a plurality of heat sources 24. The evaporator 14 is suitably a heat exchanger connected to the at least one heat source 24 and the working fluid circuit 12. The waste heat recovery system 10 may comprise one or more heat exchangers 14. The waste heat recovery system 10 may for example comprise a recuperator arranged to pre-heat the working fluid before entering the evaporator 14. The waste heat recovery system 10 may also comprise one or more condensers 18, such that cooling down of the working fluid WF may be performed in multiple steps. Furthermore, the system 10 may comprise one or more expanders 16.

The pump 22 pressurizing and circulating the working fluid WF through the circuit 12 may be non-functional or even damaged if the working fluid WF entering the pump 22 is not in a liquid state. Thus in the case where the temperature downstream of the condenser 18 is too high, such that the working fluid WF is not in a liquid state, the pressure in the reservoir 20 may be increased. This way, the working fluid WF is brought to a liquid state and may be pumped by the pump 22. The pump 22 is suitably electrically driven.

The cooling circuit 26 connected to the condenser 18 may be part of the combustion engine cooling system or a separate cooling system. The cooling fluid in the cooling circuit 26 may thereby be pumped by a cooling pump (not shown) driven by the combustion engine 2 or by an electric machine (not shown).

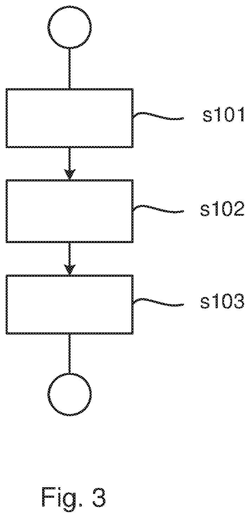

Figure 3 shows a flowchart for a method for controlling a waste heat recovery system 10 associated with a combustion engine 2 of a vehicle 1. The waste heat recovery system 10 is suitably configured as described in Figure 2. The waste heat recovery system 10 thus comprises a working fluid circuit 12; an evaporator 14; an expander 16; a condenser 18; a reservoir 20 for a working fluid WF and a pump 22 arranged to pump the working fluid WF through the circuit 12, wherein the evaporator 14 is arranged for heat exchange between the working fluid WF and at least one heat source 24, and wherein the waste heat recovery system 10 further comprises a cooling circuit 26 arranged in connection to the condenser 18. The method comprises the steps of predicting s101 a downhill slope which will require braking of the vehicle; reducing s102 the temperature of the evaporator 14 to a predetermined temperature; and turning off s103 the pump 22 and thus the waste heat recovery system 10.

When a vehicle has to be braked while driving down a slope the extra torque provided by the expander 16 is obviously not needed to propel the vehicle 1. It is therefore desired to conserve the energy in the waste heat recovery system 10 so that torque quickly can be provided when it is needed again. This can be achieved by turning off the waste heat recovery system 10. The operating temperature of the waste heat recovery system 10 is, however, normally quite high and the thermal inertia of the system 10 (specifically the thermal inertia of the evaporator 14) results in a high temperature long after the system 10 has been shut down. Too high temperatures could damage the working fluid WF and other components of the waste heat recovery system 10. It is therefore important that the waste heat recovery system 10 is cooled down before the system 10 is shut down. The evaporator 14 is the major energy reservoir in the waste heat recovery system 10. By predicting a downhill slope which will require braking of the vehicle 1, reducing the temperature of the evaporator 14 to a predetermined temperature and thereafter turning off the pump 22 and thus the waste heat recovery system 10, it is ensured that the energy in the system 10 is conserved in a safe and efficient way when it is not needed as mechanical work to propel the vehicle.

The method may comprise to predict s101 a downhill slope which will require braking of the vehicle 1 in order not to exceed a predetermined vehicle speed. Such predetermined vehicle speed may be a desired speed requested by the operator of the vehicle or it may be a speed limitation. The step of predicting s101 a downhill slope which will require braking of the vehicle 1 suitably comprises to predict such downhill slope based on road inclination, friction, length of the slope or similar. Such road data is available in the vehicle control system and may be determined by means of navigation systems, sensors and/or cameras. The step of predicting s101 a downhill slope which will require braking of the vehicle 1 suitably comprises to predict a driving situation where mechanical work provided by the expander 16 in the waste heat recovery system 10 is not needed to propel the vehicle 1.

The step of reducing s102 the temperature of the evaporator 14 may be initiated when the vehicle 1 is at the crest of the predicted downhill slope. This way, the extra torque provided by the expander 16 is used to propel the vehicle 1 up to the crest of the hill and the waste heat recovery system 10 is then cooled down before being shut down. The step of reducing s102 the temperature of the evaporator 14 may be initiated just before the vehicle 1 is at the crest of the predicted downhill slope. The step of reducing s102 the temperature of the evaporator 14 to the predetermined temperature suitably takes less than two minutes.

The step of reducing s102 the temperature of the evaporator 14 may be initiated when an auxiliary brake of the vehicle 1 has been activated. The auxiliary brake may be a retarder, an exhaust brake or a compression release brake and is associated with the powertrain 3. When an auxiliary brake of the vehicle 1 is activated while driving downhill, it is indicated that the torque from the waste heat recovery system 10 is not needed. It is thereby suitable to initiate the reduction of the evaporator temperature. Also, when the cooling circuit 26 of the waste heat recovery system 10 is part of the engine cooling system, the auxiliary brake is connected to the same cooling circuit as the waste heat recovery system 10. When the auxiliary brake is activated it thereby increases the load on the cooling circuit. In order not to load the cooling circuit 26 unnecessarily, the temperature of the evaporator 14 is suitably reduced when an auxiliary brake is activated. This way, the waste heat recovery system 10 will transfer less heat to the cooling system.

The step of reducing s102 the temperature of the evaporator 14 may comprise to control the at least one heat source 24 to bypass the evaporator 14. This way, less heat is exchanged through the evaporator 14. By controlling the heat source 24 to bypass the evaporator 14 the temperature of the evaporator 14 is reduced and the heat transfer to the working fluid WF is reduced. The circulation of the working fluid WF can thereafter be stopped without damaging the components of the waste heat recovery system 10. In the case where the heat source 24 is exhaust gases from the combustion engine 2, the step to reduce the temperature of the evaporator 14 may comprise to control the exhaust gases 24 such that they bypass the evaporator 14. The at least one heat source 24 is suitably controlled to bypass the evaporator 14 by controlling a first bypass device 36, such as a bypass valve, arranged in fluid communication with the at least one heat source 24. The at least one heat source 24 is suitably controlled to bypass the evaporator 14 as long as the pump 22 is turned off and the waste heat recovery system 10 thus is shut down.

The method may comprise the further step of controlling the working fluid WF to bypass the evaporator 14. If the evaporator 14 is bypassed on the working fluid side, the evaporator 14 does not need to be cooled down as much as if it is not bypassed on the working fluid side. By bypassing the evaporator 14 on the working fluid side, heat transfer from the evaporator 14 to the cooling circuit 26 is avoided and the full capacity of the cooling circuit 26 can instead be used to cool for example an auxiliary brake. The working fluid WF may be controlled to bypass the evaporator 14 by controlling a second bypass device 38 arranged in fluid communication with the working fluid WF. When the evaporator 14 is bypassed on the working fluid side and the heat source side the temperature of the evaporator is reduced, which will affect the ability to vaporize the working fluid. If the working fluid WF is in liquid phase when entering the expander 16, the expander 16 may be damaged. By controlling the pump 22 to decrease the mass flow of the working fluid WF, the temperature of the evaporator 14 may be enough to vaporize and superheat the working fluid WF. The expander 16 may therefore not need to be bypassed. The method may alternatively comprise to bypass the expander 16 if the temperature of the evaporator 14 is not enough to vaporize the working fluid WF.

The method may further comprise the step of starting the pump 22 when torque is requested once again or when braking of the vehicle 1 has stopped. Torque may be requested by the operator of the vehicle 1 by depressing the accelerator pedal. Torque may alternatively be requested by a vehicle system, such as a downhill speed control system. The braking of the vehicle 1 may be stopped by the operator by inactivating a previously activated auxiliary brake. The braking of the vehicle 1 may alternatively be stopped by a vehicle system inactivating a previously activated auxiliary brake. This way, it is indicated that the extra torque provided by the expander 16 is useful once again. The method suitably comprises to stop bypassing the evaporator 14 on the heat source side and the working fluid side when torque is requested once again or when braking of the vehicle 1 has stopped. The waste heat recovery system is thereby active again and heat from the at least one heat source 24 can be converted to mechanical work by the expander 16.

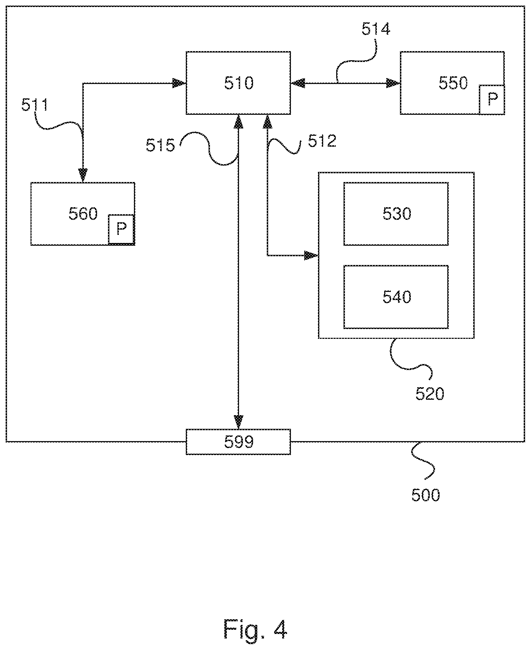

Figure 4 schematically illustrates a device 500. The control unit 30 and/or computer 32 described with reference to Figure 2 may in a version comprise the device 500. The term "link" refers herein to a communication link which may be a physical connection such as an optoelectronic communication line, or a non-physical connection such as a wireless connection, e.g. a radio link or microwave link. The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P which comprises routines for a method for controlling a waste heat recovery system 10 associated with a combustion engine 2 of a vehicle 1 according to the invention. The computer program P comprises routines for predicting a downhill slope which will require braking of the vehicle 1 in order not to exceed a predetermined vehicle speed. The computer program P comprises routines for reducing the temperature of the evaporator to a predetermined temperature. The computer program P comprises routines for turning off the pump and thus the waste heat recovery system 10. The program P may be stored in an executable form or in a compressed form in a memory 560 and/or in a read/write memory 550.

Where the data processing unit 510 is described as performing a certain function, it means that the data processing unit 510 effects a certain part of the program stored in the memory 560 or a certain part of the program stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514.

When data are received on the data port 599, they are stored temporarily in the second memory element 540. When input data received have been temporarily stored, the data processing unit 510 is prepared to effect code execution as described above.

Parts of the methods herein described may be effected by the device 500 by means of the data processing unit 510 which runs the program stored in the memory 560 or the read/write memory 550. When the device 500 runs the program, methods herein described are executed.

The foregoing description of the preferred embodiments of the present invention is provided for illustrative and descriptive purposes. It is not intended to be exhaustive or to restrict the invention to the variants described. Many modifications and variations will obviously be apparent to one skilled in the art. The embodiments have been chosen and described in order best to explain the principles of the invention and its practical applications and hence make it possible for specialists to understand the invention for various embodiments and with the various modifications appropriate to the intended use.

## Claims

1. A method for controlling a waste heat recovery system (10) associated with a powertrain (3) of a vehicle (1), the powertrain (3) comprising a combustion engine (2) and a gearbox (4) connected to the combustion engine (2), the waste heat recovery system (10) comprising a working fluid circuit (12); an evaporator (14); an expander (16); a condenser (18); a reservoir (20) for a working fluid (WF) and a pump (22) arranged to pump the working fluid (WF) through the circuit (12), wherein the evaporator (14) is arranged for heat exchange between the working fluid (WF) and at least one heat source (24), wherein the waste heat recovery system (10) further comprises a cooling circuit (26) arranged in connection to the condenser (18), and wherein the expander (16) is mechanically connected to the powertrain (3), the method comprising the steps of:
- predicting (s101) a downhill slope which will require braking of the vehicle;
- reducing (s102) the temperature of the evaporator (14) to a predetermined temperature; and
- turning off (s103) the pump (22) and thus the waste heat recovery system (10), **characterized in that** the step of reducing (s102) the temperature of the evaporator (14) comprises to control the at least one heat source (24) to bypass the evaporator (14).

2. The method according to claim 1, **wherein** a downhill slope which will require braking of the vehicle (1) is predicted (s101) based on road inclination, friction or length of the slope.

3. The method according to claim 1 or 2, **wherein** the step of reducing (s102) the temperature of the evaporator (14) is initiated when an auxiliary brake of the vehicle (1) has been activated.

4. The method according to any of the preceding claims, **wherein** it comprises the further step of controlling the working fluid (WF) to bypass the evaporator (14).

5. The method according to any of the preceding claims, **wherein** it comprises the further step of starting the pump (22) when torque is requested once again or when the braking of the vehicle (1) has stopped.

6. A waste heat recovery system associated with a powertrain (3) of a vehicle (1), the powertrain (3) comprising a combustion engine (2) and a gearbox (4) connected to the combustion engine (2), the waste heat recovery system (10) comprising a working fluid circuit (12); an evaporator (14); an expander (16); a condenser (18); a reservoir (20) for a working fluid (WF) and a pump (22) arranged to pump the working fluid (WF) through the circuit (12), wherein the evaporator (14) is arranged for heat exchange between the working fluid (WF) and at least one heat source (24), and wherein the waste heat recovery system (10) further comprises a cooling circuit (26) arranged in connection to the condenser (18), and wherein the expander (16) is mechanically coupled to the powertrain (3), wherein the waste heat recovery system (10) comprises a control unit (30) adapted to predict a downhill slope which will require braking of the vehicle; reduce the temperature of the evaporator (14) to a predetermined temperature; and to turn off the pump (22) and thus the waste heat recovery system (10), **characterized in that** the control unit (30) is adapted to reduce the temperature of the evaporator (14) by controlling the at least one heat source (24) to bypass the evaporator (14).

7. The system according to claim 6, **wherein** the control unit (30) is adapted to predict the downhill slope which will require braking of the vehicle (1) based on road inclination, friction or length of the slope.

8. The system according to claim 6-7, **wherein** the control unit (30) is adapted to initiate the reduction of the temperature of the evaporator (14) when an auxiliary brake of the vehicle (1) has been activated.

9. The system according to any of claims 6-8, **wherein** the control unit (30) is adapted to control the working fluid (WF) to bypass the evaporator (14).

10. The system according to any of claims 6-9, **wherein** the control unit (30) is further adapted to start the pump (22) when torque is requested once again or the braking of the vehicle (1) has stopped.

11. A vehicle, **characterized in that** it comprises a waste heat recovery system (10) according to any of the claims 6-10.

## Patentansprüche

1. Verfahren zum Steuern eines Abwärmerückgewinnungssystems (10), das einem Antriebsstrang (3) eines Fahrzeugs (1) zugeordnet ist, wobei der Antriebsstrang (3) einen Verbrennungsmotor (2) und ein mit dem Verbrennungsmotor (2) verbundenes Getriebe (4) umfasst, wobei das Abwärmerückgewinnungssystem (10) einen Arbeitsfluidkreislauf (12), einen Verdampfer (14), einen Expander (16), einen Kondensator (18), ein Reservoir (20) für ein Arbeitsfluid (WF) und eine Pumpe (22) aufweist, die dazu angeordnet ist, das Arbeitsfluid (WF) durch den Kreislauf (12) zu pumpen, wobei der Verdampfer (14) zum Wärmeaustausch zwischen dem Arbeitsfluid (WF) und wenigstens einer Wärmequelle (24) angeordnet ist, wobei das Abwärmerückgewinnungssystem (10) ferner einen in Verbindung mit dem Kondensator (18) angeordneten Kühlkreislauf (26) umfasst, und wobei der Expander (16) mechanisch mit dem Antriebsstrang (3) gekoppelt ist, wobei das Verfahren die Schritte umfasst:
- Vorhersage (s101) einer Gefällestrecke, die ein Abbremsen des Fahrzeugs erfordern wird,
- Reduzieren (s102) der Temperatur des Verdampfers (14) auf eine vorbestimmte Temperatur, und
- Abschalten (s103) der Pumpe (22) und damit des Abwärmerückgewinnungssystems (10),
**dadurch gekennzeichnet, dass** der Schritt des Reduzierens (s102) der Temperatur des Verdampfers (14) umfasst, die wenigstens eine Wärmequelle (24) so zu steuern, dass sie den Verdampfer (14) umgeht.

2. Verfahren nach Anspruch 1, wobei eine Gefällestrecke, die ein Abbremsen des Fahrzeugs (1) erfordern wird, basierend auf einer Straßenneigung, einer Reibung oder einer Länge der Gefällestrecke vorhergesagt wird (s101).

3. Verfahren nach Anspruch 1 oder 2, wobei der Schritt des Reduzierens (s102) der Temperatur des Verdampfers (14) eingeleitet wird, wenn eine Hilfsbremse des Fahrzeugs (1) aktiviert worden ist.

4. Verfahren nach einem der vorhergehenden Ansprüche, wobei es den weiteren Schritt des Steuerns des Arbeitsfluids (WF) zum Umgehen des Verdampfers (14) umfasst.

5. Verfahren nach einem der vorhergehenden Ansprüche, **dadurch gekennzeichnet, dass** die Pumpe (22) gestartet wird, wenn erneut ein Drehmoment angefordert wird oder wenn das Fahrzeug (1) nicht mehr gebremst wird.

6. Abwärmerückgewinnungssystem, das einem Antriebsstrang (3) eines Fahrzeugs (1) zugeordnet ist, wobei der Antriebsstrang (3) einen Verbrennungsmotor (2) und ein mit dem Verbrennungsmotor (2) verbundenes Getriebe (4) umfasst, wobei das Abwärmerückgewinnungssystem (10) einen Arbeitsfluidkreislauf (12), einen Verdampfer (14), einen Expander (16), einen Kondensator (18), ein Reservoir (20) für ein Arbeitsfluid (WF) und eine Pumpe (22) aufweist, die dazu angeordnet ist, das Arbeitsfluid (WF) durch den Kreislauf (12) zu pumpen, wobei der Verdampfer (14) zum Wärmeaustausch zwischen dem Arbeitsfluid (WF) und wenigstens einer Wärmequelle (24) angeordnet ist, und wobei das Abwärmerückgewinnungssystem (10) ferner einen in Verbindung mit dem Kondensator (18) angeordneten Kühlkreislauf (26) umfasst, und wobei der Expander (16) mechanisch mit dem Antriebsstrang (3) gekoppelt ist, wobei das Abwärmerückgewinnungssystem (10) eine Steuereinheit (30) umfasst, die eingerichtet ist zum Vorhersagen einer Gefällestrecke, die ein Abbremsen des Fahrzeugs erfordern wird, Reduzieren der Temperatur des Verdampfers (14) auf eine vorbestimmte Temperatur, und Abschalten der Pumpe (22) und damit das Abwärmerückgewinnungssystem (10), **dadurch gekennzeichnet, dass** die Steuereinheit (30) dazu eingerichtet ist, die Temperatur des Verdampfers (14) zu reduzieren, indem sie die wenigstens eine Wärmequelle (24) dazu steuert, den Verdampfer (14) zu umgehen.

7. System nach Anspruch 6, wobei die Steuereinheit (30) dazu eingerichtet ist, die Gefällestrecke, die ein Abbremsen des Fahrzeugs (1) erfordern wird, basierend auf einer Straßenneigung, einer Reibung oder einer Länge der Gefällestrecke vorherzusagen.

8. System nach Anspruch 6 bis 7, wobei die Steuereinheit (30) dazu eingerichtet ist, die Reduzierung der Temperatur des Verdampfers (14) einzuleiten, wenn eine Hilfsbremse des Fahrzeugs (1) aktiviert worden ist.

9. System nach einem der Ansprüche 6 bis 8, wobei die Steuereinheit (30) dazu eingerichtet ist, das Arbeitsfluid (WF) zum Umgehen des Verdampfers (14) zu steuern.

10. System nach einem der Ansprüche 6 bis 9, wobei die Steuereinheit (30) ferner dazu eingerichtet ist, die Pumpe (22) zu starten, wenn erneut ein Drehmoment angefordert wird oder das Abbremsen des Fahrzeugs (1) beendet ist.

11. Fahrzeug, **dadurch gekennzeichnet, dass** es ein Abwärmerückgewinnungssystem (10) nach einem der Ansprüche 6 bis 10 aufweist.

## Revendications

1. Procédé de commande d'un système de récupération de chaleur perdue (10) associé à un groupe motopropulseur (3) d'un véhicule (1), le groupe motopropulseur (3) comprenant un moteur à combustion (2) et une boîte de vitesse (4) raccordée au moteur à combustion (2), le système de récupération de chaleur perdue (10) comprenant un circuit de fluide de travail (12) ; un évaporateur (14) ; un expanseur (16) ; un condenseur (18) ; un réservoir (20) pour le fluide de travail (WF) et une pompe (22) agencés pour pomper le fluide de travail (WF) à travers le circuit (12), dans lequel l'évaporateur (14) est agencé pour un échange de chaleur entre le fluide de travail (WF) et au moins une source de chaleur (24), dans lequel le système de récupération de chaleur perdue (10) comprend en outre un circuit de refroidissement (26) agencé en raccordement au condenseur (18), et dans lequel l'expanseur (16) est raccordé mécaniquement au groupe motopropulseur (3), le procédé comprenant les étapes consistant à :
- la prédiction (s101) d'une pente descendante qui nécessitera le freinage du véhicule ;
- la réduction (s102) de la température de l'évaporateur (14) jusqu'à une température prédéterminée ; et
- l'arrêt (s103) de la pompe (22) et donc du système de récupération de chaleur perdue (10), **caractérisé en ce que** l'étape de réduction (s102) de la température de l'évaporateur (14) comprend la commande de l'au moins une source de chaleur (24) pour contourner l'évaporateur (14).

2. Procédé selon la revendication 1, **dans lequel** une pente descendante qui nécessitera le freinage du véhicule (1) est prédite (s101) sur la base de l'inclinaison de la route, du frottement ou de la longueur de la pente.

3. Procédé selon la revendication 1 ou 2, **dans lequel** l'étape de réduction (s102) de la température de l'évaporateur (14) est lancée lorsqu'un frein auxiliaire du véhicule (1) a été activé.

4. Procédé selon l'une quelconque des revendications précédentes, **dans lequel** il comprend l'étape supplémentaire de commande du fluide de travail (WF) pour contourner l'évaporateur (14).

5. Procédé selon l'une quelconque des revendications précédentes, **dans lequel** il comprend l'étape supplémentaire de démarrage de la pompe (22) lorsque le couple est à nouveau nécessaire ou lorsque le freinage du véhicule (1) s'est arrêté.

6. Système de récupération de chaleur perdue associé à un groupe motopropulseur (3) d'un véhicule (1), le groupe motopropulseur (3) comprenant un moteur à combustion (2) et une boîte de vitesse (4) raccordée au moteur à combustion (2), le système de récupération de chaleur perdue (10) comprenant un circuit de fluide de travail (12) ; un évaporateur (14) ; un expanseur (16) ; un condenseur (18) ; un réservoir (20) pour le fluide de travail (WF) et une pompe (22) agencés pour pomper le fluide de travail (WF) à travers le circuit (12), dans lequel l'évaporateur (14) est agencé pour un échange de chaleur entre le fluide de travail (WF) et au moins une source de chaleur (24), et dans lequel le système de récupération de chaleur perdue (10) comprend en outre un circuit de refroidissement (26) agencé en raccordement au condenseur (18), et dans lequel l'expanseur (16) est couplé mécaniquement au groupe motopropulseur (3), dans lequel le système de récupération de chaleur perdue (10) comprend une unité de commande (30) adaptée pour prédire une pente descendante qui nécessitera le freinage du véhicule ; réduire la température de l'évaporateur (14) jusqu'à une température prédéterminée ; et pour arrêter la pompe (22) et ainsi le système de récupération de chaleur perdue (10), **caractérisé en ce que** l'unité de commande (30) est adaptée pour réduire la température de l'évaporateur (14) par la commande de l'au moins une source de chaleur (24) afin de contourner l'évaporateur (14).

7. Système selon la revendication 6, **dans lequel** l'unité de commande (30) est adaptée pour prédire la pente descendante qui nécessitera le freinage du véhicule (1) sur la base de l'inclinaison de la route, du frottement ou de la longueur de la pente.

8. Système selon les revendications 6 et 7, **dans lequel** l'unité de commande (30) est adaptée pour lancer la réduction de la température de l'évaporateur (14) lorsqu'un frein auxiliaire du véhicule (1) a été activé.

9. Système selon l'une quelconque des revendications 6 à 8, **dans lequel** l'unité de commande (30) est adaptée pour commander le fluide de travail (WF) afin de contourner l'évaporateur (14).

10. Système selon l'une quelconque des revendications 6 à 9, **dans lequel** l'unité de commande (30) est en outre adaptée pour démarrer la pompe (22) lorsqu'un couple est à nouveau nécessaire ou que le freinage du véhicule (1) s'est arrêté.

11. Véhicule, **caractérisé en ce qu'**il comprend un système de récupération de chaleur perdue (10) selon l'une quelconque des revendications 6 à 10.
